(19) Europäisches Patentamt
European Patent Office
Office européen des brevets

(11) **EP 1 040 422 B1**

(12) **EUROPÄISCHE PATENTSCHRIFT**

(45) Veröffentlichungstag und Bekanntmachung des Hinweises auf die Patenterteilung:
**17.10.2001 Patentblatt 2001/42**

(21) Anmeldenummer: **98966777.9**

(22) Anmeldetag: **17.12.1998**

(51) Int Cl.⁷: $G06F\ 11/34$

(86) Internationale Anmeldenummer:
**PCT/DE98/03709**

(87) Internationale Veröffentlichungsnummer:
**WO 99/34292 (08.07.1999 Gazette 1999/27)**

(54) **VERFAHREN ZUR ERMITTLUNG DER AUSLASTUNG EINES RECHENGERÄTS**

METHOD FOR DETERMINING THE LOAD OF A COMPUTING DEVICE

PROCEDE DE DETERMINATION DE LA CHARGE DE TRAVAIL D'UN ORDINATEUR

(84) Benannte Vertragsstaaten:
**DE GB**

(30) Priorität: **24.12.1997 DE 19757876**

(43) Veröffentlichungstag der Anmeldung:
**04.10.2000 Patentblatt 2000/40**

(73) Patentinhaber: **ROBERT BOSCH GMBH**
**70442 Stuttgart (DE)**

(72) Erfinder: **HACHMEISTER, Marcel**
**D-70825 Korntal-Münchingen (DE)**

(74) Vertreter: **Bee, Joachim et al**
**Robert Bosch GmbH**
**Zentalabteilung Patente**
**Postfach 30 02 20**
**D-70442 Stuttgart (DE)**

(56) Entgegenhaltungen:
- **PATENT ABSTRACTS OF JAPAN vol. 010, no. 106 (P-449), 22. April 1986 -& JP 60 237550 A (TATEISHI DENKI KK), 26. November 1985**
- **PATENT ABSTRACTS OF JAPAN vol. 012, no. 220 (P-720), 23. Juni 1988 -& JP 63 016306 A (FUJI ELECTRIC CO LTD), 23. Januar 1988**
- **"PRIORITIZATION OF SMALLTALK GARBAGE COLLECTION BASED ON SYSTEM ACTIVITY" IBM TECHNICAL DISCLOSURE BULLETIN, Bd. 37, Nr. 3, 1. März 1994, Seite 609/610 XP000441603**
- **PATENT ABSTRACTS OF JAPAN vol. 018, no. 261 (P-1739), 18. Mai 1994 & JP 06 035727 A (NIPPON SIGNAL CO LTD:THE), 10. Februar 1994**

**Beschreibung**

Stand der Technik

Die Erfindung betrifft ein Verfahren zur Ermittlung der Auslastung eines Rechengeräts, insbesondere eines Mikrocomputers mit einem Echtzeitbetriebssystem, bei dem ein Leerlaufprogramm immer dann aufgerufen wird, wenn keine sonstigen Programme mehr von dem Rechengerät bearbeitet werden.

Für eine Vielzahl von Anwendungen ist es häufig erforderlich, die Auslastung eines Rechengeräts in Echtzeit zu ermitteln. Handelt es sich beispielsweise bei dem Rechengerät um einen Mikrocomputer, der in einem Steuergerät für eine Brennkraftmaschine untergebracht ist, und der unter anderem die Einspritzung von Kraftstoff und/oder die Entzündung des Kraftstoffs in der Brennkraftmaschine steuert und/oder regelt, so ist die Auslastung dieses Mikrocomoputers insbesondere abhängig von der Drehzahl der Brennkraftmaschine. Bei einer hohen Drehzahl muss der Mikrocomputer die einzuspritzende Kraftstoffmasse und den Zündzeitpunkt wesentlich häufiger ermitteln als beispielsweise im Leerlauf der Brennkraftmaschine.

Die Berechnung der Kraftstoffmasse, des Zündzeitpunkts un ggf. sonstiger Betriebskenngrößen der Brennkraftmaschine erfolgt in Abhängigkeit von Eingangsgrößen, die mit Hilfe von Sensoren gemessen und dem Mikrocomputer zugeführt werden. Insbesondere die Messung der Eingangsgrößen erfolgt dabei zu bestimmten, vorgegebenen Zeitpunkten oder mit Hilfe von sogenannten Interrupts. Für die Bearbeitung derartiger Aufgaben ist der Mikrocomputer in der Regel mit einem Echtzeitbetriebssystem ausgestattet.

Wenn aufgrund der gegebenen Betriebsbedingungen der Brennkraftmaschine keine Berechnungen von dem Steuergerät durchgeführt werden müssen, so hat dies zur Folge, dass der Mikrocomputer ein Leerlaufprogramm bearbeitet. Die Dauer des Leerlaufprogramms ist möglichst kurz gehalten, damit bei Bedarf möglichst schnell wieder eines der eigentlichen Programme bearbeitet werden kann. Wenn keines der eigentlichen Programme zur Bearbeitung ansteht, wird das Leerlaufprogramm erneut aufgerufen.

Wie bereits erwähnt, hängt die Auslastung des Mikrocomputers sehr stark von der Drehzahl der Brennkraftmaschine ab. Dabei ist es möglich, dass bei einer hohen Drehzahl oder bei einer Vielzahl anstehender Berechnungen der Mikrocomputer nicht mehr in der Lage ist, sämtliche Berechnungen rechtzeitig auszuführen. So ist es möglich, dass der Mikrocomputer beispielsweise die Berechnung des Zündzeitpunkts für die Entzündung des eingespritzten Kraftstoffs nicht mehr schnell genug berechnen kann, so dass dieser Zündzeitpunkt von dem Mikrocomputer erst dann zur Verfügung gestellt werden kann, wenn der Kraftstoff bereits hätte gezündet werden müssen.

Eine derartige Überlastung des Mikrocomputers führt also zu einer Fehlfunktion bei der Einspritzung oder Entzündung des Kraftstoffs in der Brennkraftmaschine. Dies kann dadurch verhindert werden, dass die Auslastung des Rechengeräts überwacht und derart beeinflusst wird, dass eine Überlastung möglichst nicht stattfinden kann.

Das Dokument PATENT ABSTRACTS OF JAPAN, Vol. 010, Nr. 106 (P-449), 22 April 1986 & JP-A-60 237 550 (TATEISHI DENKI KK), 26. November 1985 beschreibt ein Verfahren zur Messung der Auslastung der CPU durch Bestimmung einer Auslastungsrate ("CPU load rate"). Dabei wird ein Befehlswarte programm durch die CPU wiederholt ausgeführt, wobei die CPU die Wiederholfrequenz des Befehlswarteprogramms misst und daraus die Auslastungsrate bestimmt.

Das Dokument IBM TECHNICAL DISCLOSURE BULLETIN, Bd. 37, Nr. 3, 1. März 1994, ARMONK, USA, Seiten 609-610, "Prioritization of Smalltalk Garbage Collection Based on System Activity" beschreibt die Durchführung eines spezrellen Sammelprogramms ("garbage collection") wenn die Systemaktivität gering ist, im besten Fall wenn sich das System im Leerlauf befindet. Dazu wird durch ein Programm die Systemaktivität bestimmt, um feststellen zu können, wann das spezielle Sammelprogramm durchgeführt werden soll ohne den Benutzer zu stören. Durch Durchlaufen des Programms bei unterschiedlichen Prioritäten kann inaktive Perioden der CPU festgestellt werden.

Aufgabe der Erfindung ist es, ein Verfahren zur Ermittlung der Auslastung eines Rechengeräts zu schaffen, mit dem eine Überwachung des Rechengeräts möglichst genau durchführbar ist.

Diese Aufgabe wird bei einem Verfahren der eingangs genannten Art von den Merkmalen des Anspruchs 1 erfindungsgemäß dadurch gelöst, dass die Anzahl der Aufrufe des Leerlaufprogramms oder die gesamte Laufdauer des Leerlaufprogramms ermittelt wird und nach Überschreiten eines vorgegebenen Bezugszeitraums ausgewertet wird.

Die Anzahl der Aufrufe des Leerlaufprogramms während des Bezugszeitraums stellt ein Maß dar für die Auslastung des Rechengeräts. Je häufiger das Leerlaufprogramm aufgerufen wird, desto geringer ist die Auslastung des Rechengeräts. Umgekehrt ist die Auslastung des Rechengeräts hoch, wenn das Leerlaufprogramm während des Bezugszeitraums nur selten aufgerufen wird. Durch die Ermittlung der Anzahl der Aufrufe des Leerlaufprogramms während des Bezugszeitraums kann auf die Auslastung des Rechengeräts geschlossen werden

Entsprechend ist es möglich, aus der gesamten Laufdauer des Leerlaufprogramms während des Bezugszeitraumes auf die Auslastung des Rechengeräts zu schließen. Je größer die gesamte Laufdauer des Leerlaufprogramms ist, desto geringer ist die Auslastung des Rechengeräts. Umgekehrt ist die Auslastung des Rechengeräts hoch, wenn die gesamte Laufdauer des Leerlaufprogramms während des Bezugszeitraums klein ist.

Wenn die Anzahl der Aufrufe des Leerlaufprogramms während des Bezugszeitraums ermittelt wird, dann besteht eine besonders vorteilhafte Ausgestaltung der Erfindung darin, dass bei einem Aufruf des Leerlaufprogramms die Anzahl der Aufrufe von dem Leerlaufprogramm inkrementiert wird. Das Leerlaufprogramm selbst zählt also die Anzahl seiner Aufrufe. Dies hat den Vorteil, dass die sonstigen Programme des Rechengeräts durch das erfindungsgemäße Verfahren nicht belastet werden. Die Ausführung des erfindungsgemäßen Verfahrens findet während des Leerlaufprogramms statt, in dem das Rechengerät keinerlei sonstige Aufgaben durchzuführen hat.

Bei einer vorteilhaften Ausgestaltung der Erfindung wird nach einem Aufruf des Leerlaufprogramms von demselben geprüft, ob der Bezugszeitraum überschritten ist. Es wird also auch die Überwachung des Bezugszeitraums von dem Leerlaufprogramm selbst durchgeführt. Dies hat den Vorteil, dass die sonstigen Programme auch diesbezüglich durch das erfindungsgemäße Verfahren nicht belastet werden. Die Überwachung des Bezugszeitraums kann dabei beispielsweise dadurch von dem Leerlaufprogramm durchgeführt werden, dass die tatsächliche Zeit beim Start des Bezugszeitraums gespeichert und danach immer die Differenz zwischen der späteren tatsächlichen Zeit und der gespeicherten tatsächlichen Zeit ermittelt wird.

Bei einer weiteren vorteilhaften Weiterbildung der Erfindung wird nach einem Überschreiten des Bezugszeitraums die aktuelle Anzahl von Aufrufen auf die tatsächliche Messzeitdauer bezogen. Wenn von dem Leerlaufprogramm festgestellt wird, dass der Bezugszeitraum überschritten ist, so ist es möglich, dass bereits eine sehr weitreichende Überschreitung des Bezugszeitraums vorliegt. Würde somit die aktuelle Anzahl unmittelbar zur Ermittlung der Auslastung des Rechengeräts herangezogen werden, so würde dies zu einem gewissen Fehler führen. Dies wird erfindungsgemäß dadurch verhindert, dass die aktuelle Anzahl der Aufrufe zuerst auf die tatsächliche Messzeitdauer bezogen wird. Es wird also die aktuelle Anzahl von Aufrufen derart berücksichtigt, dass eine mögliche Überschreitung des Bezugszeitraums keine Rolle mehr spielt.

Bei einer vorteilhaften Ausgestaltung der Erfindung wird nach einem Überschreiten des Bezugszeitraums die aktuelle Anzahl von Aufrufen auf eine maximal mögliche Anzahl von Aufrufen bezogen. Diese maximal mögliche Anzahl von Aufrufen ist dabei abhängig von dem Bezugszeitraum und der Programmlaufzeit des Leerlaufprogramms. Sie muss vor der Inbetriebnahme des Rechengeräts ermittelt werden. Mit Hilfe der maximal möglichen Anzahl von Aufrufen im Bezugszeitraum ist es damit möglich, die Auslastung des Rechengeräts als relative Größe anzugeben.

Besonders vorteilhaft ist es, wenn nach einem Überschreiten des Bezugszeitraums die Anzahl der Aufrufe zurücksetzt und der Bezugszeitraum neu gestartet wird. Damit werden die Voraussetzungen geschaffen, um eine neue Ermittlung der Auslastung des Rechengeräts durchzuführen.

Die beschriebene erfindungsgemäße Ermittlung der Auslastung eines Rechengeräts kann insbesondere dann besonders vorteilhaft eingesetzt werden, wenn das Leerlaufprogramm so lange weiterläuft, bis eines der sonstigen Programme wieder zur Bearbeitung ansteht. In diesem Fall handelt es sich bei dem Leerlaufprogramm nicht um ein zyklisch ablaufendes Programm, sondern um ein Programm, das erst wieder durch einen Interrupt beendet wird, der von einem der sonstigen Programme ausgelöst wird.

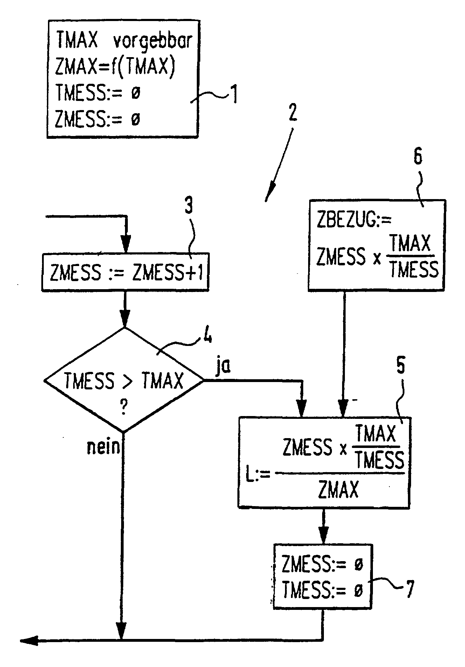

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind.

Die einzige Figur der Zeichnung zeigt ein schematisches Ablaufdiagramm eines Ausführungsbeispiels eines erfindungsgemäßen Verfahrens zur Ermittlung der Auslastung eines Rechengeräts. Dieses Ausführungsbeispiel ist nachfolgend im Zusammenhang mit einem Steuergerät für eine Brennkraftmaschine beschrieben. Es wird jedoch ausdrücklich darauf hingewiesen, dass das beschriebene Verfahren nicht auf diese Anwendung eingeschränkt ist, sondern auch bei beliebigen anderen Anwendungen eingesetzt werden kann.

Ein Steuergerät einer Brennkraftmaschine ist dazu vorgesehen, beispielsweise die einzuspritzende Kraftstoffmasse und den Zündzeitpunkt für die Entzündung des Kraftstoffs zu ermitteln und in Abhängigkeit davon unter anderem das Einspritzventil und die Zündkerze der Brennkraftmaschine anzusteuern. Die Berechnung der einzuspritzenden Kraftstoffmasse sowie des Zündzeitpunkts sind von der Drehzahl der Brennkraftmaschine abhängig. Insbesondere bei hohen Drehzahlen muss die Berechnung so schnell erfolgen, dass die Ansteuerung der Zündkerze in jedem Fall in dem berechneten Zeitpunkt stattfinden kann.

Aufgrund einer hohen Auslastung bzw. Belastung des Steuergeräts ist es möglich, dass die genannten Berechnungen nicht rechtzeitig erfolgen, so dass beispielsweise der berechnete Zündzeitpunkt erst in einem Zeitpunkt von dem Steuergerät zur Verfügung gestellt wird, wenn die Entzündung des Kraftstoffs bereits hätte stattfinden sollen.

Damit dies vermieden wird, ist es erforderlich, die Auslastung des Steuergeräts zu ermitteln, um dann bei einer hohen Auslastung die von dem Steuergerät durchzuführenden Berechnungen derart zu beeinflussen, dass die vorstehend beschriebenen Fehlfunktionen nicht auftreten.

Das Steuergerät der Brennkraftmaschine ist mit einem Mikrocomputer versehen, der mittels eines Echtzeitbetriebssystems betrieben wird. Dies bedeutet, dass in dem Steuergerät eine Mehrzahl von Programmen vorhanden sind, die immer genau dann von dem Mikrocomputer bearbeitet werden, wenn ein zugehöriger Programmaufruf von dem Betriebssystem oder ein zugehöriger Interrupt vorliegt. Beispielsweise wird der Zündzeitpunkt für die Ansteuerung der Zündkerze immer genau dann berechnet, wenn die Kurbelwelle der Brennkraftmaschine bei einer vorgegebenen Winkelstellung einen Interrupt in dem Mikrocomputer auslöst.

Wenn von dem Mikrocomputer keines der für die Steuerung und/oder Regelung der Brennkraftmaschine erforderlichen Programme momentan bearbeitet wird, so wird von dem Mikrocomputer ein Leerlaufprogramm bearbeitet. Dieses Leerlaufprogramm läuft dann zyklisch so lange, bis wieder eines der anderen Programme bearbeitet werden muss. Das Leerlaufprogramm hat üblicherweise keinerlei Aufgabe und dient nur dazu, den Leerlauf des Mikrocomputers zu realisieren.

Für die Ermittlung der Auslastung des Mikrocomputers wird das genannte Leerlaufprogramm herangezogen. Zu diesem Zweck wird ein Bezugszeitraum TMAX vorgegeben. Wird der Bezugszeitraum TMAX klein gewählt, so liefert dies letztlich eine detaillierte Auskunft über die Auslastung des Mikrocomputers. Bei einem kleinen Bezugszeitraum TMAX können auch kleine Spitzenbelastungen des Mikrocomputers ermittelt und erkannt werden. Ein mittlerer Bezugszeitraum TMAX liefert im Wesentlichen gute Informationen über die Auslastung des Mikrocomputers. Es ist jedoch möglich, dass bei einem mittleren Bezugszeitraum TMAX unter Umständen nicht erkennbare kurzzeitige Überlastungen des Mikrocomputers bereits auftreten. Wird der Bezugszeitraum TMAX groß gewählt, so ergibt sich daraus ein langfristiger Mittelwert für die Auslastung des Mikrocomputers. Überlastungen des Mikrocomputers werden dabei jedoch nicht zuverlässig erkannt.

Des Weiteren wird eine maximal mögliche Anzahl ZMAX ermittelt, die angibt, wieviele Aufrufe des Leerlaufprogramms während des Bezugszeitraums TMAX maximal möglich wären. Die maximal mögliche Anzahl ZMAX ist ein theoretischer Wert, der abhängig ist von dem Bezugszeitraum TMAX, und der vorab aus der Laufzeit TLAUF des Leerlaufprogramms durch Tests oder dergleichen ermittelt wird gemäß ZMAX = TMAX/TLAUF.

Schließlich wird eine tatsächliche Messzeitdauer TMESS auf null zurückgesetzt, sowie eine tatsächliche Anzahl ZMESS der Aufrufe des Leerlaufprogramms ebenfalls auf null gesetzt. Bei der Messzeitdauer TMESS handelt es sich um diejenige Zeitdauer, während der bei einem Betrieb des Mikrocomputers die Anzahl ZMESS der Aufrufe des Leerlaufprogramms bereits gezählt worden ist.

Die vorgenannten Einstellungen bzw. Vorgaben werden beispielsweise bei der Initialisierung des Mikrocomputers, also vor einem ersten Durchlauf des Mikrocomputers durch das Leerlaufprogramm vorgenommen. Die genannten Einstellungen bzw. Vorgaben sind in der Figur in einem Block 1 enthalten.

Ist nun im normalen Betriebszustand des Mikrocomputers keines der die Brennkraftmaschine steuernden und/oder regelnden Programme tätig, so wird das Leerlaufprogramm gestartet und durchlaufen. Ein Teil des Leerlaufprogramms ist in der Figur dargestellt und mit der Bezugsziffer 2 gekennzeichnet.

Während des Ablaufs des Leerlaufprogramms wird die Anzahl ZMESS der Aufrufe des Leerlaufprogramms inkrementiert. Dies ist in einem Block 3 durch die Gleichung ZMESS: = ZMESS + 1 dargestellt.

Danach wird in einer Raute 4 der Figur entschieden, ob die tatsächliche Messzeitdauer TMESS größer ist als der Bezugszeitraum TMAX. Es wird also geprüft, ob TMESS > TMAX ist.

Ist dies nicht der Fall, so wird das Leerlaufprogramm wie üblich fortgesetzt.

Ist dies hingegen der Fall, ist also der Bezugszeitraum TMAX überschritten, so wird die Auslastung des Mikrocomputers in einem Block 5 ermittelt. Zu diesem Zweck wird zunächst in einem Block 6 der Anteil der Aufrufe berechnet, der auf den Bezugszeitraum TMAX entfällt: ZBEZUG = ZMESS x (TMAX/TMESS). Dieser Anteil wird dann auf die Anzahl ZMAX der maximal möglichen Aufrufe des Leerlaufprogramms innerhalb der Bezugszeit TMAX bezogen.

Insgesamt ergibt sich daraus in dem Block 5 eine Berechnung der Auslastung des Mikrocomputers nach der Gleichung:

$$L: = (ZMESS \times (TMAX : TMESS)) : ZMAX.$$

Des Weiteren ist es danach möglich, die Auslastung des Mikrocomputers durch die eigentlichen Programme des Steuergeräts nach der folgenden Gleichung in Prozent anzugeben:

$$L \text{ (in \%)} : = 100 \text{ \%} - 100 \text{ \%} \times L.$$

In einem nachfolgenden Block 7 wird die Messzeitdauer TMESS und die Anzahl ZMESS der Aufrufe des Leerlaufprogramms wieder auf null zurückgesetzt. Danach wird das Leerlaufprogramm wie üblich fortgesetzt.

In Abhängigkeit von der auf diese Art und Weise ermittelten Auslastung des Mikrocomputers können Maßnahmen ergriffen werden, um bei hohen Auslastungen Fehlfunktionen zu vermeiden. So ist es möglich, bei hohen Auslastungen des Mikrocomputers nur diejenigen Programme von dem Mikrocomputer ausführen zu lassen, die für die Steuerung und/oder Regelung der Brennkraftmaschine zwingend erforderlich sind. Alle anderen, nicht zwingend erforderlichen Programme können dann während einer derartig hohen Auslastung des Mikrocomputers unterdrückt werden.

**Patentansprüche**

1. Verfahren zur Ermittlung der Auslastung eines Rechengeräts, insbesondere eines Mikrocomputers mit einem Echtzeitbetriebssystem, bei dem ein Leerlaufprogramm (2) immer dann aufgerufen wird, wenn keine sonstigen Programme mehr von dem Rechengerät bearbeitet werden, wobei die Anzahl (ZMESS) der Aufrufe des Leerlaufprogramms (2) ermittelt wird, **dadurch gekennzeichnet, daß** alternativ die gesamte Laufdauer des Leerlaufprogramms (2) ermittelt wird und die Anzahl der Aufrufe oder die gesamte Laufdauer nach Überschreiten eines vorgegebenen Bezugszeitraums (TMAX) ausgewertet wird, und daß nach einem Überschreiten des Bezugszeitrauma (TMAX) die aktuelle Anzahl (ZMESS) von Aufrufen auf die tatsächliche Meßzeitdauer (TMESS) bezogen wird.

2. Verfahren nach Anspruch 1, **dadurch gekennzeichnet, daß** bei einem Aufruf des Leerlaufprograms (2) die Anzahl (ZMESS) der Aufrufe von dem Leerlaufprogramm (2) inkrementiert wird (3).

3. Verfahren nach einem der Ansprüche 1 oder 2, **dadurch gekennzeichnet, daß** nach einem Aufruf des Leerlaufprogramms (2) von demselben geprüft wird, ob der Bezugszeitraum (TMAX) überschritten ist (4).

4. verfahren nach Anspruch 1, **dadurch gekennzeichnet, daß** nach einem Überschreiten des Bezugszeitraums (TMAX) die aktuelle Anzahl (ZBEZUG) von Aufrufen auf eine maximal mögliche Anzahl (ZMAX) von Aufrufen bezogen wird.

5. Verfahren nach Anspruch 1 oder einem der Ansprüche 3 bis 4, **dadurch gekennzeichnet, daß** nach einem Übeschreiten des Bezugszeitraums (TMAX) die Anzahl (ZMESS) der Aufrufe zurückgesetzt und der Bezugszeitraum (TMAX) neu gestartet wird.

6. Verfahren nach einem der Ansprüche 1 bis 5, **dadurch gekennzeichnet, daß** das Leerlaufprogramm (2) so lange weiterläuft, bis eines der sonstigen Programme wieder zur Bearbeitung ansteht.

7. Verfahren nach Anspruch 1, **dadurch gekennzeichnet, daß** nach einem Überschreiten des Bezugszeitraums die Laufdauer des Leerlauf- bzw. Hintergrundprogramms auf eine maximal mögliche Laufdauer bezogen wird.

8. Verfahren nach Anspruch 7, **dadurch gekennzeichnet, daß** das Leerlauf- bzw. Hintergrundprogramm so lange durchlaufen und neu gestartet wird, bis eines der sonstigen Programme wieder zur Bearbeitung ansteht.

**Claims**

1. Method for determining the workload of a computing unit, in particular a microcomputer with a real-time operating system, in the case of which method an idling program (2) is called whenever no other programs are still being processed by the computing unit, the number (ZMESS) of calls of the idling program (2) being determined, **characterized in that**, alternatively, the overall run time of the idling program (2) is determined and the number of calls or the overall run time is evaluated after overshooting of a prescribed reference time interval (TMAX), and **in that** after overshooting of the reference time interval (TMAX) the current number (ZMESS) of calls is referred to the actual measurement period (TMESS).

2. Method according to Claim 1, **characterized in that** when the idling program (2) is called the number (ZMESS) of calls is incremented (3) by the idling program (2).

3. Method according to one of Claims 1 or 2, **characterized in that** after the idling program (2) has been called it checks whether the reference time interval (TMAX) has been exceeded (4).

4. Method according to Claim 1, **characterized in that** after overshooting of the reference time interval (TMAX) the current number (ZBEZUG) of calls is referred to a maximum possible number (ZMAX) of calls.

5. Method according to Claim 1 or one of Claims 3 to 4, **characterized in that** after overshooting of the reference time interval (TMAX) the number (ZMESS) of calls is reset and the reference time interval (TMAX) is restarted.

6. Method according to one of Claims 1 to 5, **characterized in that** the idling program (2) continues to run until one of the other programs is available again for processing.

7. Method according to Claim 1, **characterized in that** after overshooting of the reference time interval the run time of the idling or background program is referred to a maximum possible run time.

8. Method according to Claim 7, **characterized in that** the idling or background program is run through or restarted until one of the other programs is available again for processing.

## Revendications

1. Procédé pour déterminer la charge d'un calculateur notamment d'un micro-ordinateur, comportant un système travaillant en temps réel, qui appelle toujours un programme de marche à vide (2) si aucun autre programme n'est traité par le calculateur, selon lequel on détermine le nombre (ZMESS) d'appels du programme de marche à vide(2), **caractérisé en ce qu'**
en variante, on détermine la totalité de la durée de fonctionnement du programme de marche à vide (2) et on exploite le nombre des appels ou la durée de fonctionnement totale après dépassement d'un intervalle de temps de référence prédéterminé (TMAX), et
après un dépassement de l'intervalle de temps de référence (TMAX), on rapporte le nombre présent (ZMESS) d'appels à la durée effective de mesure (TMESS).

2. Procédé selon la revendication 1, **caractérisé en ce qu'**
en cas d'appel du programme de marche à vide (2), on incrémente (3) le nombre (ZMESS) des appels du programme de marche à vide (2).

3. Procédé selon l'une des revendications 1 ou 2, **caractérisé en ce qu'**
après un appel du programme de marche à vide (2), celui-ci vérifie si l'intervalle de temps de référence (TMAX) a été dépassé (4).

4. Procédé selon la revendication 1, **caractérisé en ce qu'**
après un dépassement de l'intervalle de temps de référence, on rapporte le nombre actuel (ZBEZUG) d'appels à un nombre maximum possible (ZMAX) d'appels.

5. Procédé selon la revendication 1 ou l'une des revendications 3 et 4, **caractérisé en ce qu'**
après un dépassement de l'intervalle de référence (TMAX), on remet à l'état initial le nombre (ZMESS) d'appels et on redémarre l'intervalle de temps de référence (TMAX).

6. Procédé selon l'une quelconque des revendications 1 à 5, **caractérisé en ce que**
le programme de marche à vide (2) continue jusqu'à ce que l'un des autres programmes soit de nouveau traité.

7. Procédé selon la revendication 1, **caractérisé en ce qu'**
après un dépassement de l'intervalle de référence, on rapporte la durée de fonctionnement du programme de marche à vide ou d'arrière plan, à une durée de fonctionnement maximale possible.

8. Procédé selon la revendication 7, **caractérisé en ce qu'**
on parcourt le programme de marche à vide ou d'arrière plan et on le démarre de nouveau jusqu'à ce qu'un autre programme quelconque soit de nouveau utilisé.